# EUROPEAN PATENT SPECIFICATION

(11) **EP 3 647 563 B1**
(45) Date of publication and mention of the grant of the patent: **30.11.2022**
(21) Application number: 18203206.0
(22) Date of filing: 29.10.2018
(51) Int. Cl.: F02C 6/08, F02C 9/18, F02C 9/28

(54) **GAS TURBINE ENGINE CONTROL BASED ON CHARACTERISTIC OF COOLED AIR**
GASTURBINENMOTORSTEUERUNG AUF BASIS VON CHARAKTERISTIKA VON GEKÜHLTER LUFT
COMMANDE DE MOTEUR À TURBINE À GAZ BASÉE SUR LA CARACTÉRISTIQUE D'AIR REFROIDI

(43) Date of publication of application: 06.05.2020
(73) Proprietor: Raytheon Technologies Corporation, Farmington, CT 06032 (US)
(72) Inventor: ORITZ, Jonathan, El Centro, CA California 92243 (US); NARROW, Taryn, Glastonbury, CT Connecticut 06033 (US); MOSLEY, John H., Portland, CT Connecticut 06480 (US); MOTT, Zachary, Glastonbury, CT Connecticut 06033 (US); HANRAHAN, Paul R., Farmington, CT Connecticut 06032-3425 (US)
(74) Representative: Dehns

(56) References cited:
- US-A- 5 255 505
- US-A1- 2014 250 898
- US-A1- 2015 275 758
- US-A1- 2018 128 178

## Description

### BACKGROUND

This application relates to the supply of high pressure cooling air to turbine blades.

Gas turbine engines are known and typically include a fan delivering air into a bypass duct for propulsion. The fan also delivers air into a compressor where air is compressed and delivered into a combustor. The air is mixed with fuel and ignited. Products of this combustion pass downstream over turbine rotors driving them to rotate. The turbine rotors, in turn, rotate compressor rotors and the fan rotor.

As can be appreciated, many components in the turbine section see very high temperatures. One such component includes turbine blades of the high pressure turbine which are downstream of the combustor.

Traditionally, a turbine rotates at the same speed as the fan rotor. More recently, it has been proposed to include a gear reduction between a fan drive turbine and the fan rotor. With this change, the pressures and temperatures seen across the turbine sections have increased.

The turbine blades are provided with cooling air. To drive cooling air into the turbine, the cooling air must be at a higher pressure than in the past. Thus, the cooling air is typically tapped from a high pressure location.

It has been proposed to pass the cooling air through a heat exchanger prior to being delivered into the turbine section for cooling.

US 5 255 505 A discloses a gas turbine in which heat is removed from compressed air bled from the compressor section, for purposes of cooling in the turbine section, using a first heat exchanger to transfer heat from the cooling air to an intermediate fluid.

US 2018/128178 A1 discloses a first cooling stage fluidly coupled to a bleed port of a compressor to receive and cool bleed air with the air stream to produce a cool bleed air.

US 2015/275758 A1 discloses a bleed air systems for use with aircraft.

US 2014/250898 A1 discloses a bleed air systems for use with aircraft.

### SUMMARY

According to an aspect, there is provided a gas turbine engine as recited in claim 1.

In an example embodiment of the above described gas turbine engine, the cooled air passes to the plurality of turbine blades via a flow path situated radially inward of the combustor.

In another example embodiment of any of the above described gas turbine engines, the cooled air passes into a mixing chamber where it is mixed with air from a diffuser chamber prior to being passed to the plurality of turbine blades, the diffuser chamber situated radially outwardly of said combustor.

In another example embodiment of any of the above described gas turbine engines, the gas turbine engine includes a tangential on-board injector (TOBI) configured to provide the cooled air from a flow path to the plurality of turbine blades, wherein the sensor is located between an outlet of the TOBI and a position axially aligned with a leading edge of the combustor.

In another example embodiment of any of the above described gas turbine engines, the sensor is located within the TOBI.

In another example embodiment of any of the above described gas turbine engines, the measured characteristic includes a temperature of the cooled air.

In another example embodiment of any of the above described gas turbine engines, the measured characteristic is an air pressure of the cooled air.

In another example embodiment of any of the above described gas turbine engines, the measured characteristic includes a ratio of an air pressure of the cooled air to an air pressure of air downstream of the combustor, or a ratio of a temperature of the cooled air to a temperature of air downstream of the combustor.

In another example embodiment of any of the above described gas turbine engines, the gas turbine engine includes an additional sensor situated in a rim cavity downstream of the combustor, wherein the additional sensor is configured to measure one of the air pressure and the temperature of air downstream of the combustor.

In another example embodiment of any of the above described gas turbine engines, to control the operating condition of the gas turbine engine, the controller is operable to perform a valve adjustment that increases an amount of the cooled air flowing to the plurality of turbine blades or increases an amount of tapped air that is passed through the heat exchanger, wherein the valve adjustment is performed prior to entering the low power mode and wherein entering into the low power mode is performed based on the measured characteristics continuing to exceed the threshold after the valve adjustment.

In another example embodiment of any of the above described gas turbine engines, the controller is operable to subsequently cause the gas turbine engine to enter a low power mode based on the measured characteristic exceeding the threshold after the valve adjustment.

According to another aspect, there is provided a method of controlling an operating condition of a gas turbine engine as recited in claim 10. In an example embodiment of the above described method, providing the cooled air to the plurality of turbine blades in the high pressure turbine section includes passing the air through a tangential on-board injector (TOBI).

In another example embodiment of any of the above described methods, measuring a characteristic of the cooled air includes measuring a temperature or air pressure of the cooled air.

In another example embodiment of any of the above described methods, measuring a characteristic of the cooled air includes determining a ratio of the air pressure of the cooled air to an air pressure of air downstream of the combustor, or determining a ratio of the temperature of the cooled air to a temperature of air downstream of the combustor.

In another example embodiment of any of the above described methods, the method includes measuring the air pressure of air downstream of the combustor using an additional sensor that is situated in a rim cavity downstream of the combustor.

In another example embodiment of any of the above described methods, controlling the operating condition of the gas turbine engine includes performing a valve adjustment that increases an amount of the cooled air flowing to the plurality of turbine blades or increases an amount of tapped air that is passed through the heat exchanger.

In another example embodiment of any of the above described methods, the method includes subsequently causing the gas turbine engine to enter a low power mode based on the measured characteristic exceeding the threshold after the valve adjustment, wherein the valve adjustment is performed prior to entering the low power mode and wherein entering into the low power mode is performed based on the measured characteristics continuing to exceed the threshold after the valve adjustment.

### BRIEF DESCRIPTION OF THE DRAWINGS

Figure 1 is a schematic view of an example gas turbine engine.
Figure 2A is a schematic view of a cooling system for cooling turbine components.
Figure 2B is an enlarged schematic view of a tangential onboard injector (TOBI) of the cooling system of Figure 2.
Figure 3 schematically illustrates an example method of controlling an operating condition of a gas turbine engine.

### DETAILED DESCRIPTION

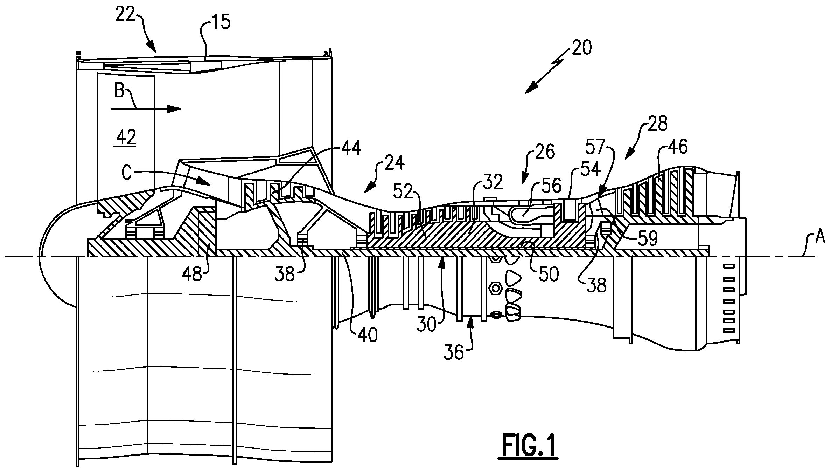

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

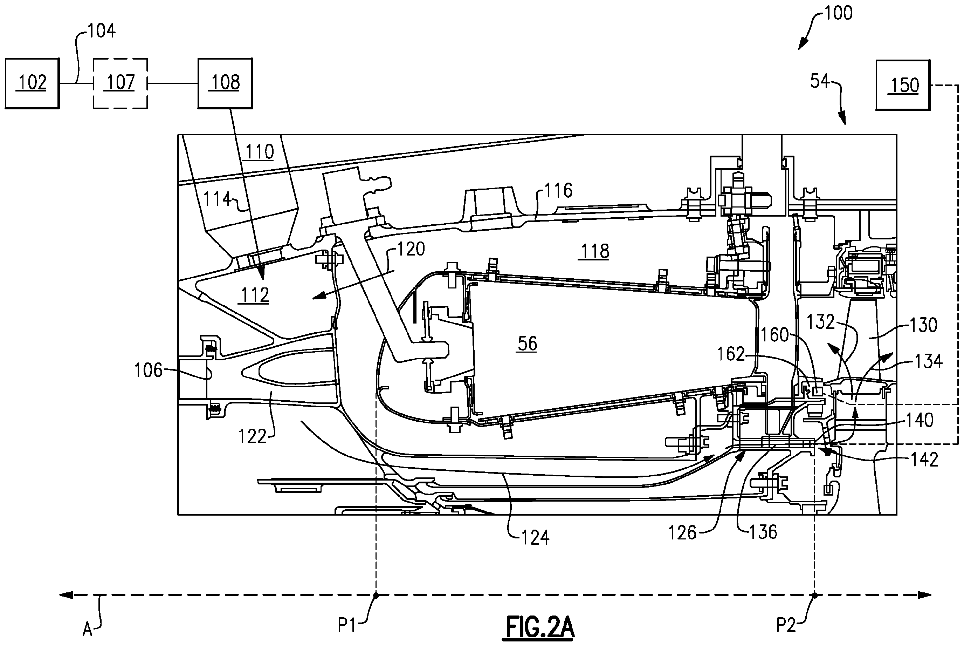

Figure 2A shows a cooling system 100 for cooling turbine components. As shown, a compressor section 102 is provided with a tap 104 for tapping pressurized air. The tap 104 may be at a location upstream from a location 106 that is a downstream most portion of the high pressure compressor 52, in which case, it is typically provided with a boost compressor to raise its pressure. Alternatively, the air can be tapped from a location downstream of location 106 where it has been fully compressed by the high pressure compressor 52.

In either case, pressurized air passes through a heat exchanger 108 where it is cooled, such as by air. In one embodiment, the heat exchanger 108 may be in the bypass duct as described in Figure 1. In another example, the heat exchanger 108 is not in the bypass duct, and a valve 107 is operable to control how much air flows to the heat exchanger 108 to be cooled.

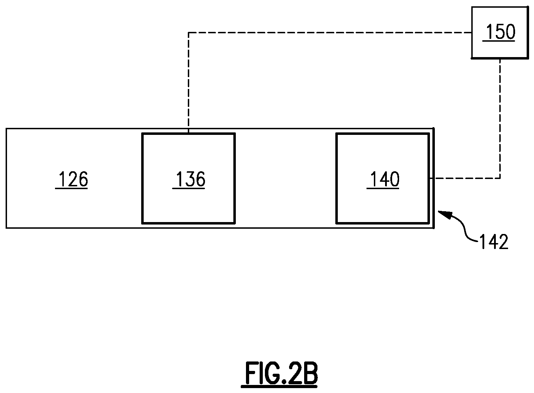

As shown in Figure 2A, cooled air downstream of the heat exchanger 108 passes into one or more conduits 110 and then into a mixing chamber 112. This flow of cooled air is shown schematically with arrow 114. Although only one conduit 110 is depicted in Figure 2, in some examples a plurality of the tube conduits 110 are circumferentially spaced about the outer circumference of outer core housing 116 to supply the desired cooled air.

Air from a diffuser case or chamber 118, outward of combustor 56, passes into the mixing chamber 112 (shown schematically with arrow 120) and mixes with the high pressure cooled air downstream of heat exchanger 108. In this manner, the cooled air is raised to a pressure and temperature closer to that needed to cool the turbine section 28.

The air in chamber 118 is downstream of the location 106 which corresponds to downstream most end of the high pressure compressor 52. The chamber 118 is defined at an outward location by the outer core housing 116.

The mixing chamber 112 is radially outward of a compressor diffuser 122, and the mixed air from flows 114, 120 passes through vanes in the compressor diffuser 122 such that it is kept separate from air downstream of location 106.

The air downstream of mixing chamber 112 passes into a flowpath 124 radially inwardly of both the outer core housing 116 and the combustor 56, and through a tangential on-board injector (TOBI) 126 to cool one or more turbine blades 130 in the high pressure turbine section 54 of the gas turbine engine 20. The TOBI 126 is an annular structure that changes an angle of exit for the cooling air that is delivered to the one or more turbine blades 130.

In some examples, after flowing through the TOBI 126, the cooled air flows into holes in the turbine blade 130 and out of the turbine blade 130 in a fore and/or aft direction (shown schematically with arrows 132, 134). Optionally, the TOBI 126 may include an annular valve 136 operable to control how much cooled air flows through the TOBI 126. The annular valve 136 is shown in the enlarged schematic view of the TOBI 126 in Figure 2B. In addition or as an alternative to the annular valve 136, in some examples valve 107 is include to control how much air flows to the heat exchanger 108 to be cooled.

If the heat exchanger 108 malfunctions, the flow 114 of cooled air may be insufficiently cooled, which could lead to overheating of the turbine blade 130. Also, if an air pressure of the flowpath 124 as it exits the TOBI 126 is too low, instead of receiving cooled air into its interior, the one or more turbine blades 130 may instead receive a backflow of heated air emitted from the combustor 56, which could also lead to overheating of the turbine blade(s) 130. Either of these scenarios could potentially shorten the life of the turbine blade(s) 130.

To avoid overheating the one or more turbine blades 130, a sensor 140 is configured to measure a characteristic of the cooled air in or entering the TOBI 126. The sensor 140 is operable to communicate with controller 150 (e.g., a full authority digital engine control "FADEC") which compares the measured characteristic to a threshold and controls an operating condition of the gas turbine engine 20 based on the comparison.

In one example, the controller 150 maintains a current engine operating mode if the measured characteristic is does not exceed the threshold, and causes the gas turbine engine 20 to enter a low power mode (e.g., an idle mode or a cruise mode) based on the measured characteristic exceeding the threshold.

The "low power mode" restricts the gas turbine engine 20 to operation within only a portion of its normal parameters, such as temperature, rotor speed, and/or thrust, within which continued safe operation is practicable..

As used herein, and as discussed below in greater detail, "exceeding" can mean being greater than the threshold in some examples (e.g., a temperature-based measured characteristic), and can mean being less than the threshold in other examples (e.g., an air pressures-based measured characteristic).

The sensor 140 is located downstream of a position PI, which is axially aligned with a leading edge of the combustor 56. In the example of Figures 2A and 2B, the sensor 140 is located within the TOBI 126 at the outlet 142 of the TOBI 126. However, other locations could be used, such as any other location within the TOBI 126, or any location along the flowpath 124 between position P1 and position P2, which is axially aligned with the outlet 142 of the TOBI 126. The location shown in Figure 2A, at the outlet of the TOBI 126, in some examples could provide the advantage of capturing the temperature adjustment of a cooling effect provided by air swirling within the TOBI 126. Of course, as discussed above, other sensor locations could be used.

In one example, the measured characteristic is based on a temperature of the air in or entering the TOBI 126, the threshold is a temperature threshold, and "not exceeding" the threshold means the temperature being less than the threshold. In one such example, the measured characteristic is the temperature itself, and in another example the measured characteristic is a ratio of the temperature of the cooled air to a temperature of air downstream of the combustor 56, and the threshold corresponds to a temperature ratio that is sufficient to cool the turbine blade 130. The temperature of the gas path air exiting the combustor 56 is measured by sensor 160 situated in rim cavity 162 in one example.

In another example, the measured characteristic is based on an air pressure of the air in or entering the TOBI 126. In one such example, the measured characteristic comprises a ratio of the air pressure of the air in or entering the TOBI 126 to an air pressure of air exiting the combustor 56, and the threshold corresponds to a pressure ratio that is sufficient to prevent so-called "backflow" where the turbine blade 130 ingests gas path air from the combustor 56 (e.g., a minimum backflow margin). The air pressure of the gas path air exiting the combustor 56 is measured by sensor 160 situated in rim cavity 162 in one example. In some examples in which the measured characteristic is based on air pressure, "not exceeding" the threshold means the air pressure value (e.g., the ratio) is greater than the threshold, such that the air pressure value for the cooled air exceeds the minimum backflow margin and prevents backflow of gas path air into the turbine blade(s) 130.

Although the sensor 160 has been described as being capable of measuring temperature and pressure, it is understood that it may be configured to measure only one of temperature and pressure, or may also measure additional parameters. Also, it is understood that in some examples the sensor 160 may be omitted.

In one example, to control the operating condition of the gas turbine engine 20, the controller 150 is operable perform an adjustment of valve 136 in an attempt to increase an amount of cooled air exiting the TOBI 126 and/or to perform an adjustment of valve 107 in an attempt to increase an amount of tapped air passing through the heat exchanger 108. In a further example, the controller 150 is operable to subsequently cause the gas turbine engine 20 to enter a low power mode based on the measured characteristic exceeding the threshold after the valve adjustment (e.g., continuing to exceed the threshold after a time period has elapsed after the valve adjustment).

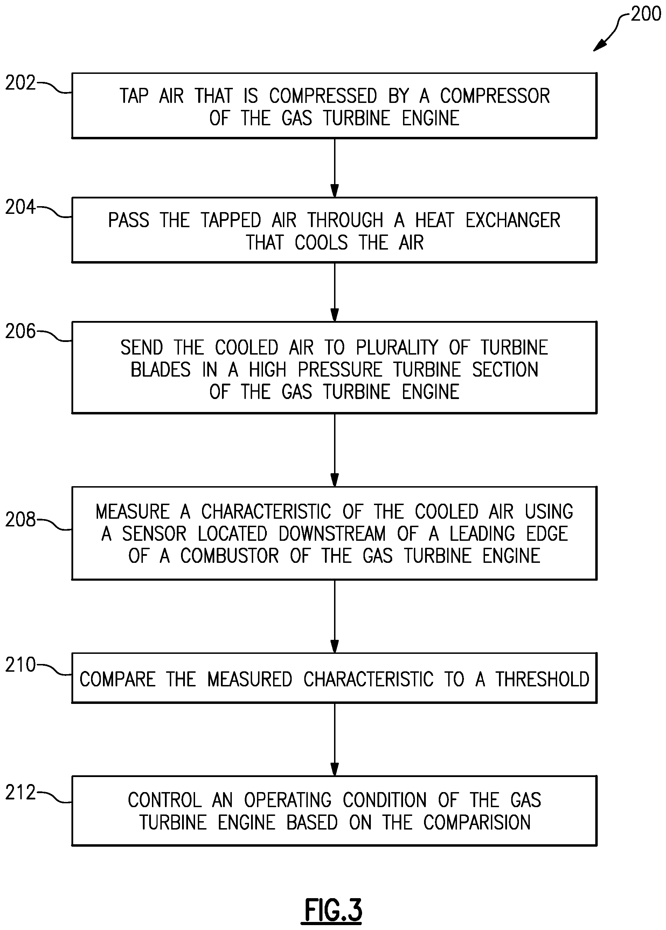

Figure 3 schematically illustrates an example method 200 of controlling an operating condition of a gas turbine engine 20. Air that is compressed by a compressor (e.g., compressor stage 102) of the gas turbine engine 20 is tapped (block 202), and the tapped air is passed through a heat exchanger 108 that cools the air (block 204). The cooled air is sent to plurality of turbine blades 130 in a high pressure turbine 54 section of the gas turbine engine 20 (block 206). A characteristic of the cooled air is measured using a sensor 140 located downstream of a leading edge of the combustor 56 of the gas turbine engine 20 (see position PI) (block 208). The measured characteristic is compared to a threshold (e.g., a temperature or air pressure threshold) (block 210), and an operating condition of the gas turbine engine 20 is controlled based on the comparison (block 212).

As discussed above, in some examples controlling the operating condition of the gas turbine engine 20 based on the comparison includes maintaining a current engine operating mode if the measured characteristic does not exceed the threshold, and causing the gas turbine engine to enter a low power mode based on the measured characteristic exceeding the threshold.

Also, as discussed above, in some examples controlling the operating condition of the gas turbine engine 20 (block 212) includes performing a valve adjustment of valve 136 to increase an amount of cooled air exiting the TOBI 126 and/or performing an adjustment of valve 107 to increase an amount of tapped air passing through the heat exchanger 108. In a further example, the method 200 includes subsequently causing the gas turbine engine 20 to enter a low power mode based on the measured characteristic still exceeding the threshold after the valve adjustment (e.g., continuing to exceed the threshold after a time period has elapsed after the valve adjustment).

Although example embodiments have been disclosed, a worker of ordinary skill in this art would recognize that certain modifications would come within the scope of the invention as defined in the appended claims. For that reason, the following claims should be studied to determine the scope and content of this disclosure.

## Claims

1. A gas turbine engine (20) comprising:
a heat exchanger (108);
a compressor section (24), a combustor (56), and a turbine section (28) including a high pressure turbine (54) comprising a plurality of turbine blades (130);
a tap (104) for tapping air that is compressed by said compressor section (24), to be passed through the heat exchanger (108) to cool the air, the cooled air to be passed to the plurality of turbine blades (130);
a sensor (140) located downstream of a leading edge of the combustor (56), the sensor (140) configured to measure a characteristic of the cooled air; and
a controller (150) configured to:
compare the measured characteristic to a threshold;.
maintain a current engine operating mode if the measured characteristic does not exceed the threshold; and
**characterised by** the controller being configured to cause the gas turbine engine (20) to enter low power mode based on the measured characteristic exceeding the threshold, wherein the low power mode restricts the gas turbine engine (20) to operation within a portion of its normal parameters for at least one of temperature, rotor speed, and thrust.

2. The gas turbine engine of claim 1, wherein the cooled air passes to the plurality of turbine blades (130) via a flowpath (124) situated radially inward of the combustor (56).

3. The gas turbine engine as set forth in claim 1 or 2, wherein the cooled air passes into a mixing chamber (112) where it is mixed with air from a diffuser chamber prior to being passed to the plurality of turbine blades (130), the diffuser chamber situated radially outwardly of said combustor (56).

4. The gas turbine engine of any preceding claim, comprising a tangential on-board injector,TOBI (126) configured to provide the cooled air from a flowpath (124) to the plurality of turbine blades (130), wherein the sensor (140) is located between an outlet of the TOBI (126) and a position axially aligned with a leading edge of the combustor (56), optionally, wherein the sensor (140) is located within the TOBI (126).

5. The gas turbine engine of any preceding claim, wherein the measured characteristic comprises a temperature of the cooled air.

6. The gas turbine engine of any preceding claim, wherein the measured characteristic is an air pressure of the cooled air.

7. The gas turbine engine of any preceding claim, wherein the measured characteristic comprises a ratio of an air pressure of the cooled air to an air pressure of air downstream of the combustor (56), or a ratio of a temperature of the cooled air to a temperature of air downstream of the combustor (56), optionally comprising an additional sensor (160) situated in a rim cavity downstream of the combustor (56), wherein the additional sensor (160) is configured to measure one of the air pressure and the temperature of air downstream of the combustor.

8. The gas turbine engine of any preceding claim, wherein, to control the operating condition of the gas turbine engine (20), the controller (150) is operable to perform a valve adjustment that increases an amount of the cooled air flowing to the plurality of turbine blades (130) or increases an amount of tapped air that is passed through the heat exchanger (108),
wherein the valve adjustment is performed prior to entering the low power mode; and
wherein entering into the low power mode is performed based on the measured characteristics continuing to exceed the threshold after the valve adjustment.

9. The gas turbine engine of claim 8, wherein the controller (150) is operable to subsequently cause the gas turbine engine (20) to enter a low power mode based on the measured characteristic exceeding the threshold after the valve adjustment.

10. A method of controlling an operating condition of a gas turbine engine (20) comprising:
tapping air that is compressed by a compressor (44, 52) of the gas turbine engine (20);
passing the tapped air through a heat exchanger (108) that cools the air;
sending the cooled air to plurality of turbine blades (130) in a high pressure turbine section (54) of the gas turbine engine (20);
measuring a characteristic of the cooled air using a sensor (140) located downstream of a leading edge of a combustor (56) of the gas turbine engine (20);
comparing the measured characteristic to a threshold;
maintaining a current engine operating mode if the measured characteristic does not exceed the threshold; and
**characterised by** causing the gas turbine engine to enter a low power mode based on the measured characteristic exceeding the threshold, wherein the low power mode restricts the gas turbine engine (20) to operation within a portion of its normal parameters for at least one of temperature, rotor speed, and thrust.

11. The method of claim 10, wherein said providing the cooled air to the plurality of turbine blades (130) in the high pressure turbine section (54) comprises passing the air through a tangential on-board injector, TOBI (126).

12. The method of claim 10 or 11, wherein said measuring a characteristic of the cooled air comprises measuring a temperature or air pressure of the cooled air, and optionally determining a ratio of:
the air pressure of the cooled air to an air pressure of air downstream of the combustor (56); or
the temperature of the cooled air to a temperature of air downstream of the combustor (56); and
further optionally measuring the air pressure of air downstream of the combustor (56) using an additional sensor (160) that is situated in a rim cavity (162) downstream of the combustor (56).

13. The method of any of claims 10 to 12, wherein controlling the operating condition of the gas turbine engine (20) comprises performing a valve adjustment that increases an amount of the cooled air flowing to the plurality of turbine blades (130) or increases an amount of tapped air that is passed through the heat exchanger (108), and optionally subsequently causing the gas turbine engine (20) to enter a low power mode based on the measured characteristic exceeding the threshold after the valve adjustment,
wherein the valve adjustment is performed prior to entering the low power mode; and
wherein entering into the low power mode is performed based on the measured characteristics continuing to exceed the threshold after the valve adjustment.

## Patentansprüche

1. Gasturbinenmotor (20), umfassend:
einen Wärmetauscher (108);
einen Verdichterabschnitt (24), eine Brennkammer (56) und einen Turbinenabschnitt (28), der eine Hochdruckturbine (54) enthält, die eine Vielzahl von Turbinenschaufeln (130) umfasst;
eine Abzapfvorrichtung (104) zum Abzapfen von Luft, die durch den Verdichterabschnitt (24) verdichtet wird, um durch den Wärmetauscher (108) geleitet zu werden, um die Luft zu kühlen, wobei die gekühlte Luft zu der Vielzahl von Turbinenschaufeln (130) geleitet wird;
einen Sensor (140), der einer Vorderkante der Brennkammer (56) nachgelagert angeordnet ist, wobei der Sensor (140) konfiguriert ist, ein Charakteristikum der gekühlten Luft zu messen; und eine Steuerung (150), die konfiguriert ist:
das gemessene Charakteristikum mit einem Schwellenwert zu vergleichen;
einen aktuellen Motorbetriebsmodus beizubehalten, wenn das gemessene Charakteristikum den Schwellenwert nicht überschreitet; und
**dadurch gekennzeichnet, dass** die Steuerung konfiguriert ist, zu bewirken, dass der Gasturbinenmotor (20) in den Niedrigleistungsmodus eintritt, basierend darauf, dass das gemessene Charakteristikum den Schwellenwert überschreitet, wobei der Niedrigleistungsmodus den Gasturbinenmotor (20) auf den Betrieb innerhalb eines Teils seiner Normalparameter für mindestens eine/n von Temperatur, Rotordrehzahl und Schub beschränkt.

2. Gasturbinenmotor nach Anspruch 1, wobei die gekühlte Luft über einen Strömungsweg (124), der radial innerhalb der Brennkammer (56) angeordnet ist, zu der Vielzahl von Turbinenschaufeln (130) strömt.

3. Gasturbinenmotor nach Anspruch 1 oder 2, wobei die gekühlte Luft in eine Mischkammer (112) strömt, wo sie mit Luft aus einer Diffusorkammer gemischt wird, bevor sie zu der Vielzahl von Turbinenschaufeln (130) geleitet wird, wobei die Diffusorkammer radial außerhalb der Brennkammer (56) angeordnet ist.

4. Gasturbinenmotor nach einem der vorhergehenden Ansprüche, umfassend einen tangentialen Bordinjektor, TOBI (126), der konfiguriert ist, der Vielzahl von Turbinenschaufeln (130) die gekühlte Luft von einem Strömungsweg (124) bereitzustellen, wobei der Sensor (140) zwischen einem Auslass des TOBI (126) und einer Position angeordnet ist, die optional axial mit einer Vorderkante der Brennkammer (56) ausgerichtet ist, wobei der Sensor (140) innerhalb des TOBI (126) angeordnet ist.

5. Gasturbinenmotor nach einem der vorhergehenden Ansprüche, wobei das gemessene Charakteristikum eine Temperatur der gekühlten Luft umfasst.

6. Gasturbinenmotor nach einem der vorhergehenden Ansprüche, wobei das gemessene Charakteristikum ein Luftdruck der gekühlten Luft ist.

7. Gasturbinenmotor nach einem der vorhergehenden Ansprüche, wobei das gemessene Charakteristikum ein Verhältnis eines Luftdrucks der gekühlten Luft zu einem Luftdruck von der Brennkammer (56) nachgelagerter Luft oder ein Verhältnis einer Temperatur der gekühlten Luft zu einer Temperatur von der Brennkammer (56) nachgelagerter Luft umfasst, optional umfassend einen zusätzlichen Sensor (160), der in einem der Brennkammer (56) nachgelagerten Randhohlraum angeordnet ist, wobei der zusätzliche Sensor (160) konfiguriert ist, eine/n von dem Luftdruck und der Temperatur von der Brennkammer nachgelagerter Luft zu messen.

8. Gasturbinenmotor nach einem der vorhergehenden Ansprüche, wobei die Steuerung (150) zum Steuern des Betriebszustands des Gasturbinenmotors (20) betreibbar ist, um eine Ventileinstellung auszuführen, die eine Menge der zu der Vielzahl von Turbinenschaufeln (130) strömenden gekühlten Luft erhöht oder eine Menge von abgezapfter Luft erhöht, die durch den Wärmetauscher (108) geleitet wird,
wobei die Ventileinstellung vor dem Eintreten in den Niedrigleistungsmodus durchgeführt wird; und
wobei das Eintreten in den Niedrigleistungsmodus basierend darauf durchgeführt wird, dass die gemessenen Charakteristika den Schwellenwert nach der Ventileinstellung weiterhin überschreiten.

9. Gasturbinenmotor nach Anspruch 8, wobei die Steuerung (150) betreibbar ist, um nachfolgend zu bewirken, dass der Gasturbinenmotor (20) in einen Niedrigleistungsmodus eintritt, basierend darauf, dass das gemessene Charakteristikum nach der Ventileinstellung den Schwellenwert überschreitet.

10. Verfahren zum Steuern einer Betriebsbedingung eines Gasturbinenmotors (20), umfassend:
Abzapfen von Luft, die von einem Verdichter (44, 52) des Gasturbinenmotors (20) verdichtet wird;
Leiten der abgezapften Luft durch einen Wärmetauscher (108), der die Luft kühlt;
Senden der gekühlten Luft zu einer Vielzahl von Turbinenschaufeln (130) in einem Hochdruckturbinenabschnitt (54) des Gasturbinenmotors (20);
Messen eines Charakteristikums der gekühlten Luft unter Verwendung eines Sensors (140), der einer Vorderkante einer Brennkammer (56) des Gasturbinenmotors (20) nachgelagert angeordnet ist;
Vergleichen des gemessenen Charakteristikums mit einem Schwellenwert;
Beibehalten eines aktuellen Motorbetriebsmodus, wenn das gemessene Charakteristikum den Schwellenwert nicht überschreitet; und
**gekennzeichnet dadurch, dass** der Gasturbinenmotor veranlasst wird, in einen Niedrigleistungsmodus einzutreten, basierend darauf, dass das gemessene Charakteristikum den Schwellenwert überschreitet, wobei der Niedrigleistungsmodus den Gasturbinenmotor (20) auf einen Betrieb innerhalb eines Teils seiner Normalparameter für mindestens eine/n von Temperatur, Rotordrehzahl und Schub beschränkt.

11. Verfahren nach Anspruch 10, wobei das Zuführen der gekühlten Luft zu der Vielzahl von Turbinenschaufeln (130) in dem Hochdruckturbinenabschnitt (54) das Leiten der Luft durch einen tangentialen Bordinjektor, TOBI, (126) umfasst.

12. Verfahren nach Anspruch 10 oder 11, wobei das Messen eines Charakteristikums der gekühlten Luft das Messen einer Temperatur oder eines Luftdrucks der gekühlten Luft umfasst und optional das Bestimmen eines Verhältnisses von:
dem Luftdruck der gekühlten Luft zu einem Luftdruck von der Brennkammer (56) nachgelagerter Luft; oder
der Temperatur der gekühlten Luft zu einer Temperatur von der Brennkammer (56) nachgelagerter Luft; und
ferner optional Messen des Luftdrucks von der Brennkammer (56) nachgelagerter Luft unter Verwendung eines zusätzlichen Sensors (160), der in einem Randhohlraum (162), der Brennkammer (56) nachgelagert, angeordnet ist.

13. Verfahren nach einem der Ansprüche 10 bis 12, wobei das Steuern des Betriebszustands des Gasturbinenmotors (20) umfasst:
das Durchführen einer Ventileinstellung, die eine Menge der gekühlten Luft, die zu der Vielzahl von Turbinenschaufeln (130) strömt, erhöht, oder eine Menge von angezapfter Luft, die durch den Wärmetauscher (108) geleitet wird, erhöht, und optional nachfolgend das Bewirken, dass der Gasturbinenmotor (20) in einen Niedrigleistungsmodus eintritt, basierend darauf, dass das gemessene Charakteristikum den Schwellenwert nach der Ventileinstellung überschreitet,
wobei die Ventileinstellung vor dem Eintreten in den Niedrigleistungsmodus durchgeführt wird; und
wobei das Eintreten in den Niedrigleistungsmodus basierend darauf durchgeführt wird, dass die gemessenen Charakteristika den Schwellenwert nach der Ventileinstellung weiterhin überschreiten.

## Revendications

1. Moteur à turbine à gaz (20) comprenant :
un échangeur de chaleur (108) ;
une section de compresseur (24), une chambre de combustion (56) et une section de turbine (28) comportant une turbine haute pression (54) comprenant une pluralité d'aubes de turbine (130) ;
un robinet (104) pour prélever de l'air qui est comprimé par ladite section de compresseur (24), devant passer à travers l'échangeur de chaleur (108) pour refroidir l'air, l'air refroidi devant être passé à la pluralité d'aubes de turbine (130) ;
un capteur (140) situé en aval d'un bord d'attaque de la chambre de combustion (56), le capteur (140) étant configuré pour mesurer une caractéristique de l'air refroidi ; et
un dispositif de commande (150) configuré pour :
comparer la caractéristique mesurée à un seuil ;
maintenir un mode de fonctionnement de moteur actuel si la caractéristique mesurée ne dépasse pas le seuil ; et **caractérisé en ce que** le dispositif de commande est configuré pour amener le moteur à turbine à gaz (20) à entrer en mode basse puissance sur la base de la caractéristique mesurée dépassant le seuil, dans lequel le mode basse puissance restreint le moteur à turbine à gaz (20) à un fonctionnement selon une partie de ses paramètres normaux pour au moins l'un parmi la température, la vitesse de rotor et la poussée.

2. Moteur à turbine à gaz selon la revendication 1, dans lequel l'air refroidi passe vers la pluralité d'aubes de turbine (130) via un trajet d'écoulement (124) situé radialement vers l'intérieur de la chambre de combustion (56).

3. Moteur à turbine à gaz selon la revendication 1 ou 2, dans lequel l'air refroidi passe dans une chambre de mélange (112) où il est mélangé avec de l'air provenant d'une chambre de diffusion avant d'être envoyé à la pluralité d'aubes de turbine (130), la chambre de diffusion étant située radialement à l'extérieur de ladite chambre de combustion (56).

4. Moteur à turbine à gaz selon une quelconque revendication précédente, comprenant un injecteur embarqué tangentiel, TOBI (126) configuré pour fournir l'air refroidi d'un trajet d'écoulement (124) à la pluralité d'aubes de turbine (130), dans lequel le capteur (140) est situé entre une sortie du TOBI (126) et une position axialement alignée avec un bord d'attaque de la chambre de combustion (56), éventuellement, dans lequel le capteur (140) est situé à l'intérieur du TOBI (126).

5. Moteur à turbine à gaz selon une quelconque revendication précédente, dans lequel la caractéristique mesurée comprend une température de l'air refroidi.

6. Moteur à turbine à gaz selon une quelconque revendication précédente, dans lequel la caractéristique mesurée est une pression d'air de l'air refroidi.

7. Moteur à turbine à gaz selon une quelconque revendication précédente, dans lequel la caractéristique mesurée comprend un rapport d'une pression d'air de l'air refroidi à une pression d'air de l'air en aval de la chambre de combustion (56), ou un rapport d'une température de l'air refroidi à une température de l'air en aval de la chambre de combustion (56), comprenant éventuellement un capteur supplémentaire (160) situé dans une cavité de rebord en aval de la chambre de combustion (56), dans lequel le capteur supplémentaire (160) est configuré pour mesurer l'une de la pression d'air et de la température de l'air en aval de la chambre de combustion.

8. Moteur à turbine à gaz selon une quelconque revendication précédente, dans lequel, pour commander l'état de fonctionnement du moteur à turbine à gaz (20), le dispositif de commande (150) peut fonctionner pour effectuer un réglage de soupape qui augmente une quantité de l'air refroidi s'écoulant vers la pluralité d'aubes de turbine (130) ou augmente une quantité d'air prélevé qui passe à travers l'échangeur de chaleur (108), dans lequel le réglage de soupape est effectué avant d'entrer dans le mode basse puissance ; et
dans lequel l'entrée dans le mode basse puissance est effectuée sur la base des caractéristiques mesurées continuant à dépasser le seuil après le réglage de soupape.

9. Moteur à turbine à gaz selon la revendication 8, dans lequel le dispositif de commande (150) peut fonctionner pour amener ultérieurement le moteur à turbine à gaz (20) à entrer dans un mode basse puissance sur la base de la caractéristique mesurée dépassant le seuil après le réglage de soupape.

10. Procédé de commande d'un état de fonctionnement d'un moteur à turbine à gaz (20) comprenant :
le prélèvement de l'air qui est comprimé par un compresseur (44, 52) du moteur à turbine à gaz (20) ;
le passage de l'air prélevé à travers un échangeur de chaleur (108) qui refroidit l'air ;
l'envoi de l'air refroidi à une pluralité d'aubes de turbine (130) dans une section de turbine haute pression (54) du moteur à turbine à gaz (20) ;
la mesure d'une caractéristique de l'air refroidi à l'aide d'un capteur (140) situé en aval d'un bord d'attaque d'une chambre de combustion (56) du moteur à turbine à gaz (20) ;
la comparaison de la caractéristique mesurée à un seuil ;
le maintien d'un mode de fonctionnement de moteur actuel si la caractéristique mesurée ne dépasse pas le seuil ; et
**caractérisé par** le fait d'amener le moteur à turbine à gaz à entrer dans un mode basse puissance sur la base de la caractéristique mesurée dépassant le seuil, dans lequel le mode basse puissance restreint le moteur à turbine à gaz (20) à un fonctionnement selon une partie de ses paramètres normaux pour au moins l'un parmi la température, la vitesse de rotor et la poussée.

11. Procédé selon la revendication 10, dans lequel ladite fourniture d'air refroidi à la pluralité d'aubes de turbine (130) dans la section de turbine haute pression (54) comprend le passage de l'air à travers un injecteur embarqué tangentiel, TOBI (126).

12. Procédé selon la revendication 10 ou 11, dans lequel ladite mesure d'une caractéristique de l'air refroidi comprend la mesure d'une température ou d'une pression d'air de l'air refroidi, et éventuellement la détermination d'un rapport de :
la pression d'air de l'air refroidi à une pression d'air de l'air en aval de la chambre de combustion (56) ; ou
la température de l'air refroidi à une température de l'air en aval de la chambre de combustion (56) ; et
en outre éventuellement la mesure de la pression d'air de l'air en aval de la chambre de combustion (56) à l'aide d'un capteur supplémentaire (160) qui est situé dans une cavité de rebord (162) en aval de la chambre de combustion (56).

13. Procédé selon l'une quelconque des revendications 10 à 12, dans lequel la commande de l'état de fonctionnement du moteur à turbine à gaz (20) comprend l'exécution d'un réglage de soupape qui augmente une quantité d'air refroidi s'écoulant vers la pluralité d'aubes de turbine (130) ou augmente une quantité d'air prélevé qui est passé à travers l'échangeur de chaleur (108), et éventuellement le fait d'amener ultérieurement le moteur à turbine à gaz (20) à entrer dans un mode basse puissance sur la base de la caractéristique mesurée dépassant le seuil après le réglage de soupape,
dans lequel le réglage de soupape est effectué avant d'entrer dans le mode basse puissance ; et
dans lequel l'entrée dans le mode basse puissance est effectuée sur la base des caractéristiques mesurées continuant à dépasser le seuil après le réglage de soupape.
